# EUROPÄISCHE PATENTANMELDUNG

(11) **EP 4 086 990 A1**
(43) Veröffentlichungstag der Anmeldung: **09.11.2022**
(21) Anmeldenummer: 22170059.4
(22) Anmeldetag: 26.04.2022
(51) Int. Cl.: H01M 8/04007, H01M 8/04089, H01M 8/04082, H01M 8/04225, H01M 8/04223, H01M 8/04302, H01M 8/0432, H01M 8/2475

(54) **BRENNSTOFFZELLENSYSTEM UND VERFAHREN ZU SEINER BETREIBUNG**

(30) Priorität: 06.05.2021 DE 102021204593
(71) Anmelder: Siemens Mobility GmbH, 81739 München (DE)
(72) Erfinder: Peymandar, De-Niang Maria, 41199 Mönchengladbach (DE); Brendel, Thomas, 40822 Mettmann (DE)

(57) **Zusammenfassung**

Ein Brennstoffzellensystem mit verbesserter Kaltstartfähigkeit umfasst ein Brennstoffzellenanordnung in einem Behälter, der eine Heizung an mindestens einer seiner Außenwände aufweist. Im Behälter sind zumindest die Brennstoffzelle und eine Zuleitung für den Brennstoff angeordnet. Für den Startvorgang wird in einer ersten Aufwärmphase der Behälter geheizt, erst danach wird die Brennstoffzelle gestartet

## Beschreibung

Die Erfindung betrifft ein Brennstoffzellensystem für ein Schienenfahrzeug und ein Verfahren zum Starten des Brennstoffzellensystems bei niedrigen Umgebungstemperaturen.

Brennstoffzellen erzeugen in einem elektro-chemischen Prozess elektrische Energie in Form von Gleichstrom. Dabei reagiert ein Brennstoff wie beispielsweise Wasserstoff mit einer weiteren Substanz wie beispielsweise Sauerstoff in einer exothermen Reaktion.

Eine Brennstoffzelle umfasst zwei Elektroden und einen dazwischen angeordneten Elektrolyten, der oft in Form einer Membran ausgebildet ist. Um die gewünschte Spannung zu erzielen, werden mehrere Zellen in Reihe geschaltet und bilden einen sogenannten Stack. Für den Betrieb sind neben der eigentlichen Brennstoffzelle weitere Komponenten notwendig, wie Gaszuleitungen, elektrische Leitungen, sowie je nach Anwendungsfall. eine Steuerung, Kühlsystem, Rezirkulationsgebläse, Pumpen, Brennstoff-Vorratsbehälter u.a.

Bei Brennstoffzellen, die Wasserstoff oder ein anderes explosives Gas einsetzen, ist es vorteilhaft, bestimmte Komponenten des Systems in einem Behälter unterzubringen. Insbesondere werden wasserstoffhaltige Komponenten in einem ausreichend gesicherten Behälter untergebracht, also zumindest die Brennstoffzelle und die Wasserstoffzuleitung einschließlich Ventile. Es kann sich dabei um einen sogenannten ATEX-Container handeln, d.h. einen Behälter, der in den Komponenten untergebracht sind, die entsprechend der ATEX Produktrichtlinie der EU für die Verwendung in explosionsgefährdeten Bereichen zugelassen sind. Beispielsweise kann ein ATEX-Container für den Einsatz einer Brennstoffzelle im Schienenverkehr, d.h. als Energiequelle für den Antrieb, verwendet werden. Im ATEX-Container untergebrachte Komponenten benötigen dafür eine entsprechende Zertifizierung, die gewährleistet, dass von ihnen keine Explosionsgefahr ausgeht. Beispielsweise müssen elektrische Bauteile wie Relais so konstruiert sein, dass es bei Schaltvorgängen nicht zu einer Funkenbildung kommen kann.

Beim Betrieb der Brennstoffzelle, insbesondere bei Niedertemperatur-Brennstoffzellen, wird Wasser gebildet, das sich zunächst in der Zelle sammelt. Üblicherweise wird es in einen Auffangtank abgeleitet und/oder verdampft. In jedem Fall verbleibt auch nach dem Abschalten der Brennstoffzelle Wasser in der Zelle. Aus diesem Grund ist ein Starten der Brennstoffzelle bei niedrigen Umgebungstemperaturen, beispielsweise unterhalb von -25°C, nicht möglich, ohne die Zelle zu schädigen. Das Restwasser in der Zelle bzw. im Stack liegt dann in gefrorener Form vor, und ein wiederholtes Auftauen und Gefrieren schädigt durch die Volumenänderung insbesondere die Membran. Dadurch kann die Brennstoffzelle vorzeitig ausfallen.

Dieses Problem schränkt die Einsatzmöglichkeiten für Brennstoffzellen beispielsweise als Energiequelle für den Antrieb in Fahrzeugen ein.

Aufgabe der Erfindung ist es, eine Anordnung und ein Verfahren für eine Brennstoffzelle anzugeben, so dass die Brennstoffzelle auch bei niedrigen Umgebungstemperaturen gestartet werden kann und dabei temperaturbedingte Schädigungen der Brennstoffzelle weitestgehend vermieden werden.

Das Verfahren und die Anordnung sollen insbesondere bei Schienenfahrzeugen einsetzbar sein.

Diese Aufgaben werden gelöst durch eine Anordnung mit den Merkmalen des Patentanspruchs 1, durch ein Schienenfahrzeug mit den Merkmalen des Patentanspruchs 8 und durch ein Verfahren gemäß Patentanspruch 10.

Vorteilhafte Ausgestaltungen der Erfindung sind in den Unteransprüchen angegeben.

Die Erfindung sieht vor, mindestens eine Außenwand eines Behälters, in dem eine Brennstoffzelle, eine Zuleitung für den Brennstoff und ggf. weitere Komponenten des Brennstoffzellensystems untergebracht sind, mit einer Heizung zu versehen. Die im Behälter angeordneten Komponenten des Systems sind im Folgenden als Brennstoffzellenanordnung bezeichnet.

Mithilfe dieser Heizung wird die Brennstoffzelle bzw. das Innere des Behälters in einer ersten Aufwärmphase erwärmt, dabei kann die erste Aufwärmphase durch Erreichen einer ersten Grenztemperatur im Behälter oder nach einer ersten Aufwärmzeit, d.h. zeitgesteuert, beendet werden. Die erste Grenztemperatur, die mit einem im Behälter angeordneten Temperatursensor ermittelt wird, liegt vorzugsweise im Intervall zwischen -20°C und -30°C und besonders bevorzugt bei -25°C. Dann wird die Brennstoffzelle gestartet, da durch die erreichte Aufwärmung größere Schäden bereits vermieden werden. Durch den Betrieb entsteht Abwärme, die zur weiteren Erwärmung der Brennstoffzelle eingesetzt wird. Dadurch werden Eiskristalle in der Zelle aufgelöst. Gleichzeitig oder nach einer zweiten Aufwärmphase, d.h. nach einer zweiten Aufwärmzeit oder bei Erreichen einer zweiten Grenztemperatur, wird die Heizung abgestellt. Die zweite Grenztemperatur liegt vorzugsweise im Intervall zwischen -5°C und +5°C und besonders bevorzugt bei 0°C. Sie kann aber auch nur wenig höher als die erste Grenztemperatur liegen.

Gemäß einer anderen Ausführungsform wird die Heizung im Wesentlichen gleichzeitig mit dem Starten der Brennstoffzelle abgeschaltet, d.h. die zweite Aufwärmphase kann entfallen.

Vorzugsweise wird nach der ersten Aufwärmphase bzw. bei Erreichen der ersten Grenztemperatur die Brennstoffzelle zunächst mit eingeschränkter Leistung betrieben. Diese kann so bemessen sein, dass der Eigenbedarf der Brennstoffzelle gedeckt wird, d.h. dass sie ihre eigenen Komponenten mit der benötigten Energie versorgt. Es entsteht dabei weniger Abwärme als im Volllast-Betrieb, so dass der Temperaturanstieg in der Zelle ausreichend langsam und damit schonend erfolgt.

Vorzugsweise ist der Behälter ein gesicherter Behälter, besonders bevorzugt ist er für eine Verwendung in explosionsgefährdeten Bereichen ausgebildet, insbesondere ist er ein sogenannter ATEX-Container. Gemäß einer Ausführungsform weist er eine Metallwand auf, so dass eine ausreichende Wärmeübertragung ins Innere des Behälters sichergestellt ist. Die Heizung kann als elektrische Plattenheizung ausgeführt sein, die eine oder mehrere Wände ganz oder teilweise bedeckt. Sie kann von einer Bordnetzbatterie mit Energie versorgt werden. Die Energieversorgung kann zeitgesteuert erfolgen, bevorzugt ist aber eine Steuerung mithilfe eines im Behälter angeordneten Temperatursensors. Dieser ist mit der Heizung und/oder deren Energieversorgung gekoppelt und bewirkt, dass bei Erreichen der zweiten Grenztemperatur oder bereits bei der ersten Grenztemperatur die Heizung abgestellt wird.

Im Behälter kann zusätzlich ein Latentwärmespeicher vorhanden sein, der während des Startens zusätzlich Wärme abgibt und so den Energiebedarf der Heizung verringert. Latentwärmespeicher sind insbesondere Materialien, die bei Zufuhr von Wärmeenergie einen Phasenübergang fest - flüssig durchlaufen, beim Abkühlen aber zunächst nicht wieder den festen kristallisierten Zustand einnehmen, d.h. unterkühlt sind. Die Wärmeenergie wird dann frei, wenn die Kristallisation durch geeignete Auslösemechanismen erfolgt. Mit einem Latentwärmespeicher kann also die im Betrieb der Brennstoffzelle entstehende Wärme gespeichert werden und während des Startvorgangs freigesetzt und genutzt werden.

Die Erfindung wird im Folgenden anhand von Ausführungsbeispielen, die in den Figuren dargestellt sind, näher erläutert. Es zeigen in schematischer Darstellung
- Fig.1: ein Brennstoffzellensystem
- Fig.2: eine Brennstoffzellenanordnung in einem Behälter

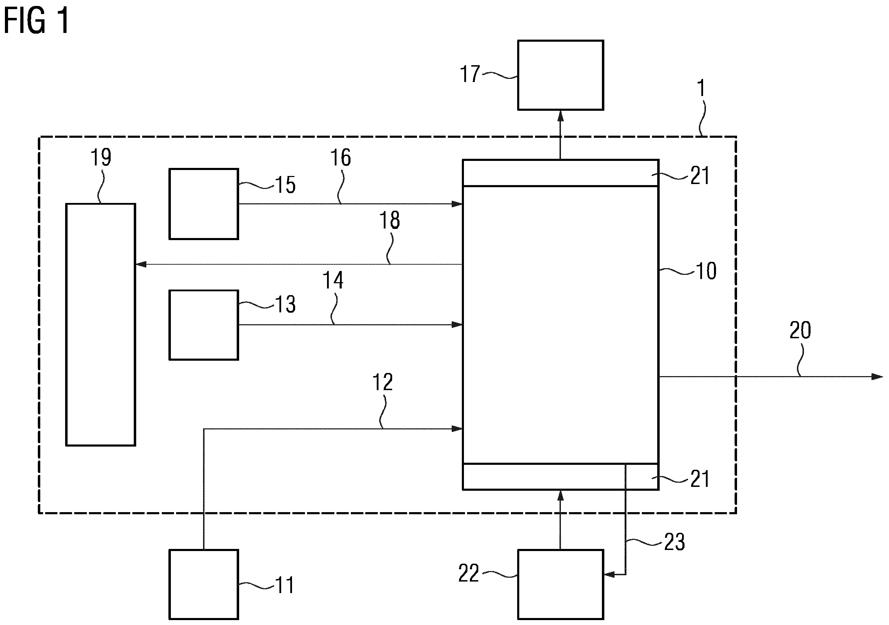

Figur 1 zeigt einen schematischen Aufbau eines Brennstoffzellensystems 1, das beispielsweise in einem Schienenfahrzeug eingesetzt werden kann. Das System umfasst einen gesicherten Behälter 10, in dem u.a. die Brennstoffzelle sowie weitere, ATEX-zertifizierte Komponenten angeordnet sind und der im Folgenden als Container bezeichnet ist. Ferner umfasst das System einen Vorratsbehälter 11 für Wasserstoff mit einer Zuleitung 12 zum Container 10 und einen Kompressor 13 mit einer Zuleitung 14 für komprimierte Luft zum Container 10. Diese Zuleitungen 12, 14 dienen der Versorgung der Brennstoffzelle mit Wasserstoff und Sauerstoff. Eine Kühleinrichtung mit einer Kühlpumpe 15 und einer Kühlleitung 16 dient der Ableitung von Abwärme im Betrieb der Brennstoffzelle. Die Kühleinrichtung kann als einfacher Kühlkreislauf ausgebildet sein oder, wie in der Figur dargestellt, einen Latentwärmespeicher 17 aufweisen, d.h. den Latentwärmespeicher 17 im Betrieb aufladen. Der Latentwärmespeicher 17 kann wie dargestellt außerhalb des Containers 10 angeordnet sein und zur Wärmeversorgung anderer Komponenten eingesetzt werden. Alternativ oder zusätzlich kann er innerhalb des Containers 10 angeordnet sein und für eine Aufwärmung beim Startvorgang eingesetzt werden.

Der im Betrieb der Brennstoffzelle erzeugte Strom wird über eine Leitung 18 an einen Spannungswandler oder Umrichter 19 oder eine andere elektrische Einrichtung geleitet. Der Spannungswandler kann insbesondere ein DC/DC Spannungswandler sein und kann einer Traktionsbatterie eines Schienenfahrzeugs zugeordnet sein, so dass diese aufgeladen wird.

Der Container 10 weist ferner einen Auslass 20 für ein Reaktionsprodukt der Brennstoffzelle auf, beispielsweise Wasser in flüssiger oder gasförmiger Form.

An der Außenwand des Containers 10 ist eine Heizung 21 angebracht, die mit einer Energieversorgung 22 gekoppelt ist und die Wand erwärmt. Die Heizung 21 kann als elektrische Plattenheizung ausgeführt sein und eine oder mehrere Wände ganz oder teilweise bedecken. Als Energieversorgung 22 wird bei Einsatz in einem Fahrzeug vorzugsweise dessen Bordnetzbatterie verwendet. Die Energieversorgung 22 bzw. dessen Energieabgabe an die Heizung 21 wird mithilfe einer im Container gemessenen Temperatur über die Verbindung 23 gesteuert, wobei diese Verbindung auch drahtlos sein kann.

Aus Gründen der Übersichtlichkeit sind in den Figuren nicht alle Komponenten des Brennstoffzellensystems dargestellt und einige nicht erfindungswesentliche Teile nicht gezeigt.

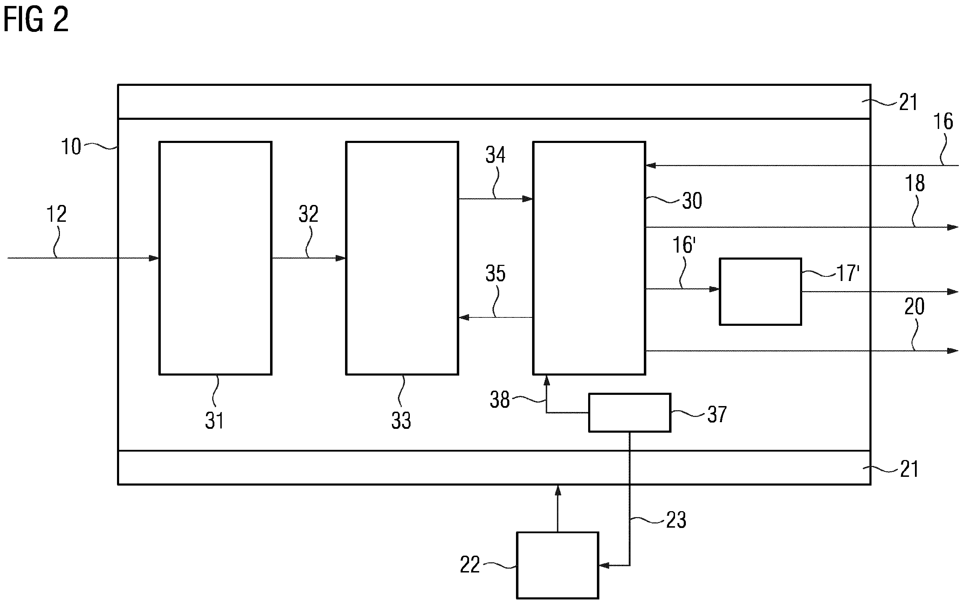

Figur 2 zeigt schematisch den Container 10 mit darin angeordneten Komponenten des Brennstoffzellensystems. Eine Brennstoffzelle 30, die als Niedertemperatur-Brennstoffzelle wie beispielsweise eine PEM-Zelle ausgebildet ist, wird im Betrieb mit dem Kühlmedium der Kühlleitung 16 gekühlt. Die Brennstoffzelle kann insbesondere als Stack ausgebildet sein. Im Container 10 sind ferner die Wasserstoffkomponenten untergebracht, in diesem Fall ein Wasserstoff-Ventilaggregat 31 und ein über eine Leitung 32 daran angeschlossenes Rezirkulationsgebläse 33 für Wasserstoff. Die Brennstoffzelle 30 ist mit dem Rezirkulationsgebläse 33 über eine Zuleitung 34 und eine Ableitung 35 verbunden. Das Rezirkulationsgebläse dient der Rezirkulation des unverbrauchten Wasserstoffs zurück zum Stack und erhöht somit den Wirkungsgrad. Das gebildete Produktwasser wird aus der Brennstoffzelle und aus dem Container 10 über die Leitung 20 abgeleitet.

Vorteilhafterweise ist im Container 10 ein Latentwärmespeicher 17' angeordnet, der über die Leitung 16' des Kühlkreislaufs geladen wird.

Die Figur zeigt ferner die an der Außenwand des Containers angebrachte Heizung 21 mit Versorgung durch die Bordnetzbatterie 22 sowie einen Temperatursensor 37, der über eine nicht dargestellte Steuerung in Verbindung 23 mit der Bordnetzbatterie steht und somit an die Heizung 21 gekoppelt ist.

Die Brennstoffzelle kann auch bei niedrigen Umgebungstemperaturen unter -25°C ohne Schädigung folgendermaßen gestartet werden: zunächst werden mithilfe der elektrischen Heizung 21 die Wände des Containers 10 geheizt. Die Temperatur in dem Container wird mit dem Temperatursensor 37 gemessen. Sobald die Temperatur eine erste Grenztemperatur erreicht, wird die Brennstoffzelle 30 mithilfe ihrer nicht näher dargestellten Steuerung automatisch gestartet, dies wird durch die Verbindung 38 symbolisiert. Alternativ ist auch möglich, die Brennstoffzelle nach Ablauf einer bestimmten Zeit (erste Aufwärmphase) zu starten, und die Heizung für eine bestimmte Dauer (erste und zweite Aufwärmphase) einzuschalten oder nach einer bestimmten Zeit nach dem Start der Brennstoffzelle (zweite Aufwärmphase) wieder abzuschalten, dann kann auf den Temperatursensor 37 verzichtet werden. Analog zur Ausführungsform mit Temperatursteuerung kann die Heizung auch gleichzeitig mit dem Start der Brennstoffzelle abgeschaltet werden, d.h. die zweite Aufwärmphase kann entfallen.

Vorzugsweise wird die Brennstoffzelle zunächst nicht mit ihrer vollen Leistung betrieben, sondern unter Teillast. Besonders bevorzugt ist ein Betrieb, bei dem die Brennstoffzelle gerade so viel Energie erzeugt, dass sie die eigenen Komponenten, d.h. die Komponenten des Brennstoffzellensystems, mit der benötigten Energie versorgt. Durch den Betrieb der Brennstoffzelle entsteht auch Wärmeenergie, wodurch sich das Innere des Containers 10 weiter erwärmt und auch vorhandene Eiskristalle im Stack aufgelöst werden. Gemäß einer bevorzugten Ausführungsform wird die Brennstoffzelle erst dann mit voller Leistung betrieben, wenn auch die Ventile in den Gaszuführungen zum Stack aufgetaut sind.

Bei Erreichen einer zweiten Grenztemperatur wird die elektrische Heizung automatisch abgeschaltet. Nachfolgend wird die Brennstoffzelle bis zur gewünschten Leistung hochgefahren. Alternativ kann die Leistung auch schon vor Erreichen der zweiten Grenztemperatur in einem gewünschten Maß erhöht werden.

Der im Container 10 vorhandene Latentwärmespeicher 17' kann zusätzliche Wärmeenergie zur Verfügung stellen und die Bordnetzbatterie 22 so entlasten. Er kann je nach Dimensionierung und Anforderungen vor oder nach Erreichen der ersten Grenztemperatur zugeschaltet, d.h. aktiviert werden und nach gewählten Vorgaben (bestimmte Zeit, Temperatur, Entladezustand u.a.) wieder abgeschaltet werden.

Die Grenztemperaturen können je nach Anforderungen gewählt werden. Vorteilhaft ist eine erste Grenztemperatur im Bereich -30°C bis -20°C, besonders bevorzugt -25°C. Für die zweite Grenztemperatur ist bevorzugt der Bereich -5°C bis +5°C, besonders bevorzugt 0°C.

Mit der erfindungsgemäßen Anordnung und dem Verfahren können Brennstoffzellen auch bei sehr tiefen Umgebungstemperaturen von beispielsweise -40°C wiederholt gestartet werden, ohne dass Schädigungen durch gefrorenes Reaktionsprodukt auftreten. Dadurch ist das Brennstoffzellensystem besonders geeignet für Schienenfahrzeuge, da diese oft bei entsprechenden Bedingungen starten müssen.

Es werden nur wenige und preisgünstige zusätzliche Komponenten benötigt, im Wesentlichen eine Heizung an der Außenwand eines Behälters, in dem wasserstoffführende Teile des Systems untergebracht sind. Da der Behälter in der Regel aus Metall mit guter Wärmeleitfähigkeit ist, kann mit einer einfachen Heizung an einer oder mehreren Außenwänden das Innere schnell und mit wenig Energie aufgewärmt werden. Besonders einfach ist eine elektrische Plattenheizung, die von der Bordbatterie versorgt wird. Wenn zusätzlich ein Latenzwärmespeicher im Behälter angeordnet ist, kann der Energiebedarf weiter reduziert werden.

Die Anbringung der Heizung an der Außenwand ist besonders einfach, da außerhalb des Behälters handelsübliche Komponenten verwendet werden können, die keine aufwändige und teure Zertifizierung hinsichtlich ihrer Explosionsgefahr oder Gefährdungsklasse benötigen, insbesondere keine ATEX-Zertifizierung.

Die Erfindung ist grundsätzlich bei allen Brennstoffzellentypen anwendbar.

## Patentansprüche

1. Brennstoffzellenanordnung in einem Behälter (10), die eine Brennstoffzelle (30) und eine Zuleitung (34) für den Brennstoff aufweist, mit einer Heizung (21) an mindestens einer der Außenwände des Behälters (10).

2. Anordnung nach Anspruch 1, **dadurch gekennzeichnet, dass** die Brennstoffzellenanordnung im Behälter (10) ein Rezirkulationsgebläse (33) aufweist.

3. Anordnung nach einem der vorherigen Ansprüche, **dadurch gekennzeichnet, dass** sie einen Temperatursensor im Behälter (37) aufweist, der mit der Heizung (21) gekoppelt ist.

4. Anordnung nach einem der vorherigen Ansprüche, **dadurch gekennzeichnet, dass** die Heizung (21) eine elektrische Heizung, insbesondere eine elektrische Plattenheizung ist.

5. Anordnung nach einem der vorherigen Ansprüche, **dadurch gekennzeichnet, dass** im Behälter (10) ein Latentwärmespeicher (17') angeordnet ist.

6. Anordnung nach einem der vorherigen Ansprüche, **dadurch gekennzeichnet, dass** sie für die Energieversorgung in einem Schienenfahrzeug, insbesondere für dessen Antrieb, ausgebildet ist.

7. Anordnung nach einem der vorherigen Ansprüche, **dadurch gekennzeichnet, dass** der Behälter (10) für die Verwendung in explosionsgefährdeten Bereichen ausgebildet ist.

8. Schienenfahrzeug mit einer Brennstoffzellenanordnung nach einem der Ansprüche 1 bis 7.

9. Schienenfahrzeug nach dem vorhergehenden Anspruch, **dadurch gekennzeichnet, dass** die elektrische Heizung (21) an eine Bordnetzbatterie (22) des Schienenfahrzeugs angeschlossen ist.

10. Verfahren zum Starten einer Brennstoffzelle,
- bei dem die Brennstoffzelle (30) und eine Brennstoffzuleitung (34) in einem Behälter (10) angeordnet sind, wobei der Behälter (10) mindestens eine Wand mit einer außen daran angeordneten Heizung (21) aufweist
- bei dem vor dem Starten der Brennstoffzelle die Wand des Behälters (10) mittels der Heizung (21) geheizt wird
- bei dem nach einer ersten Aufwärmphase die Brennstoffzelle (30) gestartet wird
- bei dem gleichzeitig oder nach einer zweiten Aufwärmphase die Heizung (21) abgeschaltet wird.

11. Verfahren nach Anspruch 10, **dadurch gekennzeichnet, dass** die Temperatur im Behälter ermittelt wird, und dass bei Erreichen einer ersten Grenztemperatur die Brennstoffzelle (30) gestartet wird.

12. Verfahren nach dem vorherigen Anspruch, **dadurch gekennzeichnet, dass** die erste Grenztemperatur im Bereich - 30°C bis -20°C, vorzugsweise bei etwa -25°C, liegt.

13. Verfahren nach einem der vorherigen Ansprüche, **dadurch gekennzeichnet, dass** die Brennstoffzelle (30) nach dem Starten zunächst im Teillastbetrieb betrieben wird, wobei die dabei erzeugte Energie den Energiebedarf der Brennstoffzelle deckt.

14. Verfahren nach einem der vorherigen Ansprüche, **dadurch gekennzeichnet, dass** mit der nach dem Starten der Brennstoffzelle (30) erzeugten Abwärme die Brennstoffzelle erwärmt wird.

15. Verfahren nach einem der vorherigen Ansprüche, **dadurch gekennzeichnet, dass** die Temperatur im Behälter (10) ermittelt wird, und dass bei Erreichen einer zweiten Grenztemperatur die Heizung (21) abgeschaltet wird und die Brennstoffzelle (30) mit höherer Leistung als für den Betrieb der Brennstoffzelle benötigt betrieben wird.

16. Verfahren nach dem vorherigen Anspruch, **dadurch gekennzeichnet, dass** die zweite Grenztemperatur im Bereich - 5°C bis +5°C, vorzugsweise bei etwa 0°C, liegt.

17. Verfahren nach einem der vorherigen Ansprüche, **dadurch gekennzeichnet, dass** im Behälter (10) ein Latentwärmespeicher (17') angeordnet ist, der während der ersten oder der zweiten Aufwärmphase als Wärmequelle betrieben wird.

18. Verfahren nach einem der vorherigen Ansprüche, **dadurch gekennzeichnet, dass** die Brennstoffzelle (30) bei einer Umgebungstemperatur unter -30°C gestartet wird.

19. Verfahren nach einem der vorherigen Ansprüche, **dadurch gekennzeichnet, dass** die Brennstoffzelle als Energiequelle für den Antrieb eines Schienenfahrzeugs eingesetzt wird.
